# EUROPÄISCHE PATENTSCHRIFT

(11) **EP 2 022 997 B1**
(45) Veröffentlichungstag und Bekanntmachung des Hinweises auf die Patenterteilung: **17.04.2013**
(21) Anmeldenummer: 08013077.6
(22) Anmeldetag: 21.07.2008
(51) Int. Cl.: F16D 25/08

(54) **Nehmerzylinder**
Slave cylinder
Cylindre récepteur

(30) Priorität: 10.08.2007 DE 102007037844
(43) Veröffentlichungstag der Anmeldung: 11.02.2009
(73) Patentinhaber: Schaeffler Technologies AG & Co. KG, 91074 Herzogenaurach (DE)
(72) Erfinder: Rocquet, Stephane, 45640 Sandillon (FR); Sainton, Denis, 45520 Chevilly (FR)

(56) Entgegenhaltungen:
- DE-A1- 19 716 473
- DE-A1- 19 956 771
- US-A- 4 585 109
- US-A1- 2003 221 930

## Beschreibung

Die Erfindung betrifft einen Zentralausrücker für Kraftfahrzeuge, mit den Merkmalen des Oberbegriffs des Anspruchs 1.

Nehmerzylinder, die Teil einer hydraulischen Strecke zur Betätigung einer Kupplung darstellen, bestehen im Wesentlichen aus einem Gehäuse mit einem darin axial beweglich angeordneten Kolben, der zur Realisierung einer Druckübertragung gegenüber dem umliegenden Gehäuse abgedichtet ist. Diese Abdichtung wird dabei einerseits durch eine am Kolben und damit bewegliche bzw. dynamische Dichtung und andererseits mit einer außerhalb des Kolbens, nämlich einer im Gehäuse angeordneten und damit statischen Dichtung realisiert. Ist dieser Nehmerzylinder konzentrisch um eine Getriebeeingangswelle angeordnet, ist der im Nehmerzylinder angeordnete Kolben für den Durchgang dieser Getriebeeingangswelle als Ringkolben ausgebildet. Derartige Nehmerzylinder werden heutzutage aufgrund ihrer zur Kupplungs- bzw. Getriebeeingangswelle konzentrischen Anordnung auch als Zentralausrücker bezeichnet.

Zur Vermeidung des Eintragens von Schmutz aus der Umgebung bei der Bewegung des Kolbens bzw. zur Abdichtung des Ringkolbens sind anstelle der bisher verwendeten statischen Dichtung für die am Ringkolben befestigte dynamische Dichtung des Zentralausrückers unterschiedliche Maßnahmen bekannt. So wird zum Beispiel in der DE 197 16 473 C2 vorgeschlagen, eine zusätzliche als Staubhülse ausgebildete Hülse zwischen dem Ringkolben und einem axialen Fortsatz des Gehäuses anzuordnen. Nachteilig an dieser Hülse ist, dass sie als zylindrisches Bauteil eine relativ große Andruckkraft in radialer Richtung nach außen aufbringen muss, um die gewünschte Dichtwirkung zu erzielen. Daher ist für diese Bauweise eine sehr steife Staubhülse notwendig, wobei eine entsprechend genaue Bearbeitung der abzudichtenden Fläche notwendig ist. In die Dichtflächen eindringender Staub oder sonstiger Schmutz führt dabei unweigerlich zu einer Verringerung der Dichtwirkung.

Die Aufgabe der vorliegenden Erfindung besteht deshalb darin, einen Zentralausrücker mit einer einfachen und kostengünstig herstellbaren Abdichtung des Zwischenraumes zwischen den bewegbaren Bauteilen gegenüber der Umgebung bzw. des Druckraumes vorzuschlagen, wobei diese Abdichtung den Bauraum des Nehmerzylinders nicht vergrößern soll und durch eine auf Dauer zuverlässige Dichtwirkung des Kolbens gewährleistet ist.

DE 19956771 offenbart einen Zentralausrücker nach dem Oberbegriff des Anspruchs 1.

Diese Aufgabe wird mit einem Zentralausrücker mit den Merkmalen des Anspruchs 1 gelöst.

Vorteilhafte Ausgestaltungen der Erfindung ergeben sich aus den Merkmalen der Unteransprüche.

Die Erfindung wird nachfolgend anhand eines Ausführungsbeispiels und zugehöriger Zeichnungen näher erläutert.

Es zeigen:
- Figur 1: einen Schnitt durch einen erfindungsgemäßen Zentralausrücker, in dem sich der Kolben in einer ersten bzw. oberen Endstellung befindet,
- Figur 2: einen Schnitt gemäß Figur 1, wobei sich der Kolben in einer Mittelstellung befindet,
- Figur 3: einen Schnitt gemäß Figur 1, wobei sich der Kolben in einer zweiten bzw. unteren Endstellung befindet,
- Figur 4: eine perspektivische Darstellung des erfindungsgemäßen Schmutzschutzes mit Druckfeder.

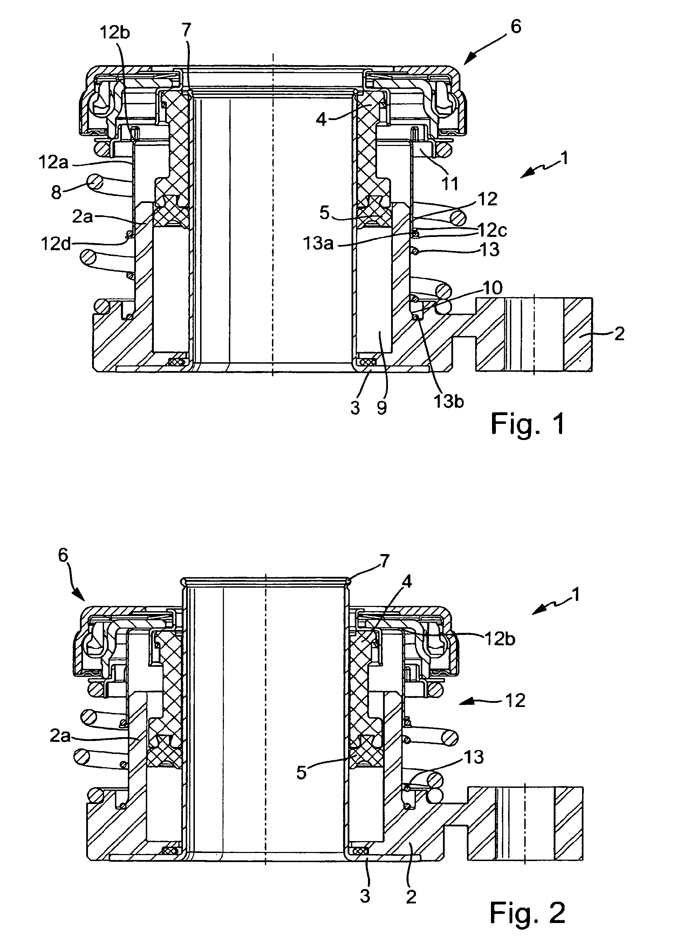

Die Figuren 1 bis 3 zeigen einen Zentralausrücker 1 mit drei unterschiedlichen Kolbenstellungen. Zur Beschreibung der Figuren werden dabei die gleichen Bezugszeichen verwendet.

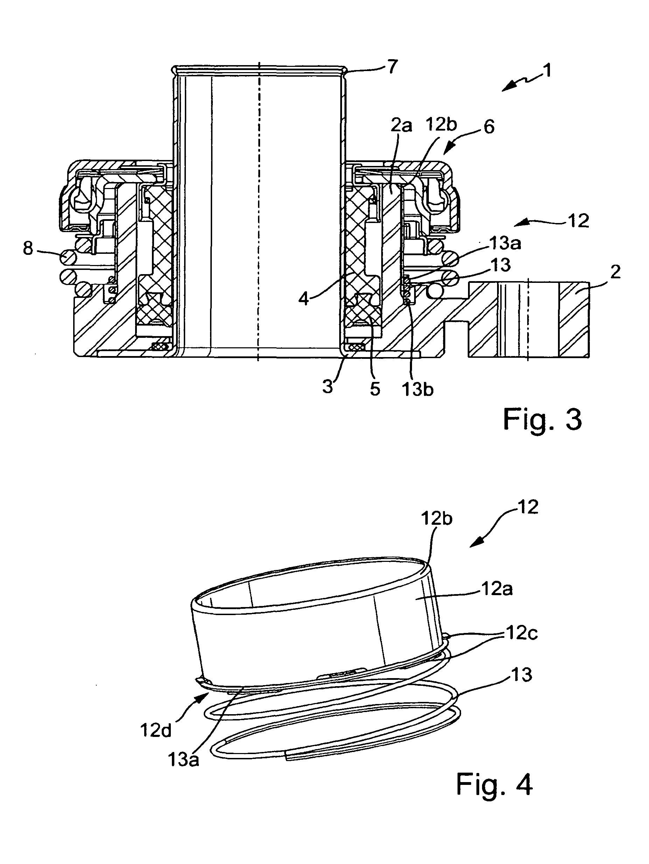

Die Figuren 1 und 3 zeigen einen Zentralausrücker 1 in jeweils einer Endstellung des Kolbens 4, wobei in Figur 1 der Kolben 4 in einer ersten vollständig ausgefahrenen Stellung, also einer ersten Endstellung, dargestellt ist. In Figur 3 ist die zweite Endstellung des Kolbens 4 aufgezeigt, in der er vollständig eingefahren ist.

Der in diesen drei Figuren dargestellte Zentralausrücker 1 umfasst im Wesentlichen eine Führungshülse 3, ein Gehäuse 2 mit einer axialen Ausdehnung 2a sowie einen zwischen Führungshülse 3 und Gehäuse 2 angeordneten Kolben 4. Das Gehäuse 2, insbesondere die axiale Ausdehnung 2a und die Führungshülse 3 begrenzen einen im Wesentlichen zylindertorusförmigen Druckraum 9, in dem der Kolben 4 gegenüber der Umgebung abgedichtet hydraulisch axial bewegbar ist. An einem Ende des Kolbens 4 ist ein Dichtelement 5 in Form einer Nutringdichtung angebracht, während das andere Ende des Kolbens 4 mit einem Ausrücklager 6 in Verbindung steht, das mit einem topfförmigen Lagerring 11 verbunden ist. Eine endseitig an der Führungshülse 3 angeformte Wulst 7 dient als vorderer Anschlag für den Weg des Kolbens 4. Die Begrenzung des Weges in umgekehrter Richtung des Kolbens 4 erfolgt dadurch, dass der mit dem Ausrücklager 6 verbundene Lagerring 11 mit seinem Boden an der ringförmigen Stirnfläche der axialen Ausdehnung 2a des Gehäuses 2 anschlägt. Zur Erzeugung einer Vorspannung auf das Ausrücklager 6 ist ein Energiespeicher in Form einer Druckfeder 8 vorgesehen. Diese Druckfeder 8 stützt sich mit ihren Endwindungen einerseits am Gehäuse 2 und andererseits am Ausrücklager 6 ab. Der durch die Führungshülse 3, die axiale Ausdehnung 2a des Gehäuses 2 sowie den Kolben 4 begrenzte Druckraum 9 steht mit einem nicht dargestellten Hydraulikanschluss in Wirkverbindung, über den der Kolben 4 mit Druck beaufschlagbar ist.

Zum Schutz der am Kolben 4 angebrachten dynamischen Dichtung 5 ist dieser ein Schmutzschutz 12 radial vorgelagert, der im Wesentlichen aus einem zylinderförmigen Grundkörper 12a besteht, dessen vorderes Ende 12b nach innen umgebördelt und dessen hinteres Ende 12d mit mehreren über den Umfang verteilt angeordneten Rastelementen 12c versehen ist. Der zylinderförmige Grundkörper 12a ist dabei mindestens so lang zu wählen, dass er in axialer Richtung den freien Raum zwischen einem mit dem Ausrücklager 6 verbundenen Lagerring 11 und der axialen Ausdehnung 2a des Gehäuses 2 überdeckt.

Dieser Schmutzschutz 12 liegt mit seinem hinteren Ende 12d auf dem Umfang der axialen Ausdehnung 2a des Gehäuses 2 auf und wird durch einen mit dem Schmutzschutz 12 verbundenen Energiespeicher 13 in Form einer Druckfeder zusätzlich auf der axialen Ausdehnung 2a geführt. Dazu wird die Endwindung 13a der Druckfeder 13 jeweils zwischen zwei versetzt axial hintereinander liegenden, am Umfang des Schmutzschutzes 12 verteilt angeordneten Rastelementen 12c eingeklemmt, während die Endwindung 13b in einer im Gehäuse 2 vorgesehenen Aussparung 10, die als umlaufende Nut ausgebildet ist, aufgenommen wird. Ebenso gut könnte anstelle der Druckfeder 13 ein Tellerfederpaket eingesetzt werden.

Der Schmutzschutz 12 besteht aus einem entsprechend stabilen Material, das metallisch oder nichtmetallisch oder aber auch Kunststoff sein kann, das einem Druck in axialer Richtung standhält. Bei der Verwendung eines Schmutzschutzes 12 aus Kunststoff können zur Erhöhung dessen Biegesteifigkeit beispielsweise Glasfasern oder ähnliches beigemengt sein.

Bei der axialen Bewegung des Kolbens 4 und damit auch der des Ausrücklagers 6 verändert sich, wie in den Figuren 1 bis 3 dargestellt, der Federweg der Druckfeder 13 entsprechend der Druckbelastung.

In Figur 1, wo der Kolben 4 seine vollständig ausgefahrene Stellung einnimmt, das heißt er befindet sich in seiner ersten bzw. oberen Endstellung, befindet sich die Druckfeder 13 im unbelasteten Zustand und weist daher ihre größte axiale Ausdehnung auf. Der Schmutzschutz 12 wird in dieser Stellung des Kolbens 4 mit seinem vorderen Ende 12b im Lagerring 11 aufgenommen und überdeckt mit seinem zylinderförmigen Grundkörper 12a die axiale Ausdehnung des Kolbens 4 mitsamt der Nutringdichtung 5, so dass diese geschützt ist.

In Figur 2 befindet sich der Kolben 4 in einer Mittelstellung, das heißt, er ist vom Anschlag 7 entfernt und ist im Begriff entweder sich infolge einer Druckbeaufschlagung zur Ausrückung einer nicht dargestellten Kupplung in deren Richtung zu bewegen, oder aber der Ausrückvorgang ist beendet und der Kolben 4 bewegt sich infolge des nachlassenden Druckes in seine entgegengesetzte Endlage. In beiden Fällen wird entweder der Lagerring 11 vom Schmutzschutz 12 mit Druck beaufschlagt oder aber dieser drückt auf den Schmutzschutz 12, so dass dieser wiederum die Druckfeder 13 mit Druck beaufschlagt. In dieser Mittelstellung des Kolbens 4 ist somit entweder die Druckfeder 13 noch zusammengedrückt oder wird wieder zusammengedrückt.

In Figur 3 nimmt der Kolben 4 seine zweite bzw. hintere Endstellung ein, in der er vollständig in die axiale Ausdehnung 2a des Gehäuses 2 eingefahren ist. In diesem Falle ist die Druckfeder 13 vollständig zusammengedrückt und damit auf Block gegangen und der Schmutzschutz 12 liegt umschließend mit seinem umgebördelten vorderen Ende 12b an der Endkante der axialen Ausdehnung 2a an, wodurch auch ein möglicher Zwischenraum zwischen dieser Endkante und dem Ausrücklager 6 vor dem Eindringen von Schmutz geschützt ist.

Aus diesen Figuren 1 bis 3 ist erkennbar, dass über die gesamte Wegstrecke des Kolbens 4 dieser und die Nutringdichtung 5 nach außen hin vor Schmutz geschützt sind. Dadurch wird gewährleistet, dass zwischen dem Innendurchmesser der axialen Ausdehnung 2a des Gehäuses 2 und dem Außendurchmesser des Kolbens 4 keine Schmutzpartikel eindringen können, die sich schließlich bei der Bewegung des Kolbens 4 zwischen Nutringdichtung 5 und dem Innendurchmesser der axialen Ausdehnung 2a des Gehäuses 2 setzen können. Auf diese Weise würde ein Spalt entstehen, über den dann die Schmutzpartikel über die Nutringdichtung 5 in den mit Hydraulikfluid gefüllten Druckraum 9 gelangen und das Fluid verunreinigen könnten. Durch diese Spaltbildung zwischen Nutringdichtung 5 und axialer Ausdehnung 2a würde es möglich, dass unerwünscht Hydraulikfluid aus dem Zentralausrücker 1 austreten kann.

Figur 4 zeigt den erfindungsgemäßen Schmutzschutz 12 in einer perspektivischen Darstellung. Hieraus ist der zylinderförmige Grundkörper 12a des Schmutzschutzes 12 mit seinem vorderen Ende 12b und seinem hinteren Ende 12d ersichtlich. Während das vordere Ende 12b nach innen umgebördelt ist, um sich der äußeren Form der Endkante der axialen Ausdehnung 2a des Gehäuses 2 anzupassen, ist das hintere Ende 12d mit Rastelementen 12c zur Aufnahme der Endwindung 13a der Druckfeder 13 versehen, die in axialer Richtung in zwei Reihen angeordnet sind. Der Abstand zwischen beiden Reihen ist dabei an den Durchmesser der Endwindung 13a der Druckfeder 13 angepasst. Diese Rastelemente 12c sind in diesem Ausführungsbeispiel als über den Umfang des Schmutzschutzes 12 verteilt angeordnete Segmente ausgeführt. Allerdings könnte ebenso gut als Halterung für die Druckfeder 13 eine Wendel auf ca. 270° des Umfanges des Schmutzschutzes 12 aufgebracht sein; oder es könnten auch anstelle der Segmente Stifte verwendet werden.

Durch diesen einfach aufgebauten, angefederten Schmutzschutz 12, der leicht herstellbar ist, wird die Nutringdichtung 5 vor einem Eindringen von Schmutz aus der Umgebung geschützt und damit eine Spaltbildung an dieser Stelle verhindert, was eine Erhöhung der Lebensdauer des Zentralausrückers 1 zur Folge hat.

### Bezugszeichenliste

- 1: Zentralausrücker
- 2: Gehäuse
- 2a: axiale Ausdehnung
- 3: Führungshülse
- 4: Kolben
- 5: Dichtelement / Nutringdichtung / dynamische Dichtung
- 6: Ausrücklager
- 7: Anschlag
- 8: Energiespeicher / Druckfeder
- 8a: Endwindung
- 8b: Endwindung
- 9: Druckraum
- 10: Aussparung
- 11: Lagerring
- 12: Schmutzschutz
- 12a: zylinderförmiger Grundkörper
- 12b: vorderes Ende
- 12c: Rastelement
- 12d: hinteres Ende
- 13: Energiespeicher / Druckfeder
- 13a: Endwindung
- 13b: Endwindung

## Patentansprüche

1. Zentralausrücker (1) für Kraftfahrzeuge, mit einem eine axiale Ausdehnung (2a) aufweisenden Gehäuse (2) und einem darin axial beweglich angeordneten Kolben (4), der mit einem Ausrücklager (6) in Wirkverbindung steht und dieses Ausrücklager (6) mittels eines sich am Gehäuse (2) abstützenden ersten Energiespeichers (8) eine axiale Vorspannung erhält, wobei auf der axialen Ausdehnung (2a) ein angefederter Schmutzschutz (12) geführt ist, **dadurch gekennzeichnet, dass** der angefederte Schmutzschutz (12) mit einem zweiten Energiespeicher (13) verbunden ist.

2. Zentralausrücker (1) nach Anspruch 1, **dadurch gekennzeichnet, dass** der Energiespeicher (13) als Druckfeder ausgeführt ist und die Endwindungen (13a) und (13b) aufweist.

3. Zentralausrücker (1) nach Anspruch 1 und 2, **dadurch gekennzeichnet, dass** der Schmutzschutz (12) aus einem zylinderförmigen Grundkörper (12a) gebildet wird, der ein vorderes Ende (12b) und ein hinteres Ende (12d) aufweist.

4. Zentralausrücker (1) nach Anspruch 3, **dadurch gekennzeichnet, dass** das vordere Ende (12b) nach innen umgebördelt ist.

5. Zentralausrücker (1) nach Anspruch 3, **dadurch gekennzeichnet, dass** das hintere Ende (12d) am Umfang Rastelemente (12c) aufweist.

6. Zentralausrücker (1) nach Anspruch 5, **dadurch gekennzeichnet, dass** die Rastelemente (12c) als über den Umfang des Schmutzschutzes verteilte Segmente ausgeführt und in axialer Richtung in zwei Reihen angeordnet sind.

7. Zentralausrücker (1) nach Anspruch 6, **dadurch gekennzeichnet, dass** die Rastelemente (12c) einer Reihe zu den Rastelementen (12c) der anderen Reihe versetzt angeordnet sind.

8. Zentralausrücker (1) nach Anspruch 6, **dadurch gekennzeichnet, dass** der Abstand zwischen den beiden Reihen der Rastelemente (12c) mit dem Durchmesser der Endwindung (13a) der Druckfeder (13) korrespondiert.

9. Zentralausrücker (1) nach den Ansprüchen 1 bis 3, **dadurch gekennzeichnet, dass** das vordere Ende (12b) des Schmutzschutzes (12) mit dem Lagerring (11) in Wirkverbindung steht.

10. Zentralausrücker (1) nach den Ansprüchen 1 bis 2, **dadurch gekennzeichnet, dass** die Endwindung (13b) der Druckfeder (13) in einer Aussparung (10) des Gehäuses (2) aufgenommen wird.

11. Zentralausrücker (1) nach Anspruch 10, **dadurch gekennzeichnet, dass** die Aussparung (10) als umlaufende Nut ausgeführt ist.

12. Zentralausrücker (1) nach Anspruch 1, **dadurch gekennzeichnet, dass** der Schmutzschutz (12) aus einem biegesteifen Material besteht, das metallisch oder nichtmetallisch sein kann.

13. Zentralausrücker (1) nach Anspruch 1, **dadurch gekennzeichnet, dass** der Schmutzschutz (12) aus einem biegesteifen Kunststoff hergestellt ist.

## Claims

1. Central clutch operator (1) for motor vehicles, having a housing (2), which has an axial extension (2a), and a piston (4) which is arranged axially movably therein and is operatively connected to a disengagement bearing (6), and the said disengagement bearing (6) is given an axial prestress by means of a first energy store (8) which is supported on the housing (2), a sprung dirt guard (12) being guided on the axial extension (2a), **characterized in that** the sprung dirt guard (12) is connected to a second energy store (13).

2. Central clutch operator (1) according to Claim 1, **characterized in that** the energy store (13) is configured as a compression spring and has the end turns (13a) and (13b).

3. Central clutch operator (1) according to Claims 1 and 2, **characterized in that** the dirt guard (12) is formed from a cylindrical main body (12a) which has a front end (12b) and a rear end (12d).

4. Central clutch operator (1) according to Claim 3, **characterized in that** the front end (12b) is flanged-over to the inside.

5. Central clutch operator (1) according to Claim 3, **characterized in that** the rear end (12d) has latching elements (12c) on the circumference.

6. Central clutch operator (1) according to Claim 5, **characterized in that** the latching elements (12c) are configured as segments which are distributed over the circumference of the dirt guard, and are arranged in two rows in the axial direction.

7. Central clutch operator (1) according to Claim 6, **characterized in that** the latching elements (12c) of one row are arranged offset with respect to the latching elements (12c) of the other row.

8. Central clutch operator (1) according to Claim 6, **characterized in that** the spacing between the two rows of the latching elements (12c) corresponds with the diameter of the end turn (13a) of the compression spring (13).

9. Central clutch operator (1) according to Claims 1 to 3, **characterized in that** the front end (12b) of the dirt guard (12) is operatively connected to the bearing ring (11).

10. Central clutch operator (1) according to Claims 1 and 2, **characterized in that** the end turn (13b) of the compression spring (13) is received in a cut-out (10) of the housing (2).

11. Central clutch operator (1) according to Claim 10, **characterized in that** the cut-out (10) is configured as a circumferential groove.

12. Central clutch operator (1) according to Claim 1, **characterized in that** the dirt guard (12) is composed of a flexurally stiff material which can be metallic or non-metallic.

13. Central clutch operator (1) according to Claim 1, **characterized in that** the dirt guard (12) is manufactured from a flexurally stiff plastic.

## Revendications

1. Dispositif de débrayage central (1) pour véhicules automobiles, comprenant un boîtier (2) présentant une étendue axiale (2a) et un piston (4) disposé de manière déplaçable axialement dans celui-ci, qui est en liaison fonctionnelle avec un palier de débrayage (6) et ce palier de débrayage (6) obtenant une précontrainte axiale au moyen d'un accumulateur d'énergie (8) s'appuyant sur le boîtier (2), une protection contre les salissures (12) montée sur ressort étant guidée sur l'étendue axiale (2a), **caractérisé en ce que** la protection contre les salissures (12) montée sur ressort est connectée à un deuxième accumulateur d'énergie (13).

2. Dispositif de débrayage central (1) selon la revendication 1, **caractérisé en ce que** l'accumulateur d'énergie (13) est réalisé sous forme de ressort de compression et présente les enroulements d'extrémité (13a) et (13b).

3. Dispositif de débrayage central (1) selon les revendications 1 et 2, **caractérisé en ce que** la protection contre les salissures (12) est formée d'un corps de base cylindrique (12a) qui présente une extrémité avant (12b) et une extrémité arrière (12d).

4. Dispositif de débrayage central (1) selon la revendication 3, **caractérisé en ce que** l'extrémité avant (12b) est rabattue vers l'intérieur.

5. Dispositif de débrayage central (1) selon la revendication 3, **caractérisé en ce que** l'extrémité arrière (12d) présente des éléments d'encliquetage (12c) sur sa périphérie.

6. Dispositif de débrayage central (1) selon la revendication 5, **caractérisé en ce que** les éléments d'encliquetage (12c) sont réalisés sous forme de segments répartis sur la périphérie de la protection contre les salissures et sont disposés en deux rangées dans la direction axiale.

7. Dispositif de débrayage central (1) selon la revendication 6, **caractérisé en ce que** les éléments d'encliquetage (12c) d'une rangée sont disposés de manière décalée par rapport aux éléments d'encliquetage (12c) de l'autre rangée.

8. Dispositif de débrayage central (1) selon la revendication 6, **caractérisé en ce que** la distance entre les deux rangées d'éléments d'encliquetage (12c) correspond au diamètre de l'enroulement d'extrémité (13a) du ressort de compression (13).

9. Dispositif de débrayage central (1) selon les revendications 1 à 3, **caractérisé en ce que** l'extrémité avant (12b) de la protection contre les salissures (12) est en liaison fonctionnelle avec la bague de palier (11).

10. Dispositif de débrayage central (1) selon les revendications 1 à 2, **caractérisé en ce que** l'enroulement d'extrémité (13b) du ressort de compression (13) est reçu dans un évidement (10) du boîtier (2).

11. Dispositif de débrayage central (1) selon la revendication 10, **caractérisé en ce que** l'évidement (10) est réalisé sous forme de rainure périphérique.

12. Dispositif de débrayage central (1) selon la revendication 1, **caractérisé en ce que** la protection contre les salissures (12) se compose d'un matériau rigide en flexion, qui peut être métallique ou non métallique.

13. Dispositif de débrayage central (1) selon la revendication 1, **caractérisé en ce que** la protection contre les salissures (12) est fabriquée en un plastique rigide en flexion.
